Europäisches Patentamt

European Patent Office

Office européen des brevets

(11) Veröffentlichungsnummer: **0 303 299 B1**

# EUROPÄISCHE PATENTSCHRIFT

(45) Veröffentlichungstag der Patentschrift: **13.05.92**

(51) Int. Cl.⁵: **A21B  5/02**, A21C 15/02

(21) Anmeldenummer: **88113216.1**

(22) Anmeldetag: **13.08.88**

(54) Wickelvorrichtung für einen Waffelbackautomaten.

(30) Priorität: **14.08.87 DE 3727162**

(43) Veröffentlichungstag der Anmeldung:
**15.02.89 Patentblatt  89/07**

(45) Bekanntmachung des Hinweises auf die
Patenterteilung:
**13.05.92 Patentblatt  92/20**

(84) Benannte Vertragsstaaten:
**AT BE CH DE ES FR GB GR IT LI LU NL SE**

(56) Entgegenhaltungen:
EP-A- 0 181 424      EP-B- 0 096 679
DE-A- 3 515 532      DE-A- 3 543 090
DE-A- 3 613 292      DE-C- 2 759 095

(73) Patentinhaber: **WILHELM MEYER ZU VENNE KG
Hauptstrasse 1
W-4514 Ostercappeln 2 / Venne(DE)**

(72) Erfinder: **Herting, Heinrich
Grenzweg 24
W-4690 Herne 1(DE)**

(74) Vertreter: **von Rohr, Hans Wilhelm, Dipl.-Phys.
et al
Patentanwälte Gesthuysen & von Rohr Huyssenallee 15 Postfach 10 13 33
W-4300 Essen 1(DE)**

Rank Xerox (UK) Business Services
(3.08/2.19/2.0)

## Beschreibung

Die Erfindung betrifft eine Wickelvorrichtung für einen Waffelbackautomaten nach dem Oberbegriff des Anspruchs 1.

Die Herstellung von gewickelten Waffeln, wie sie beispielsweise als Eistüten oder zylindrisches Gebäck Verwendung finden, erfolgt auf Waffelbackautomaten. Die Backvorrichtung eines solchen Waffelbackautomaten stößt flache, heiße Waffeln aus, die dann über eine mehr oder weniger kompliziert aufgebaute Fördereinrichtung in eine Wickeleinrichtung geführt werden, die regelmäßig aus einer einen seitlichen Einführschlitz aufweisenden Wickelhülse und einem kegelförmigen oder zylindrischen Wickelkern besteht. Der Wikkelkern ist in Längsrichtung gegenüber der Wickelhülse verschiebbar, um nach dem Wickeln die gewickelte Waffel aus der Wickelhülse zu entfernen und von einer Abnahmeeinrichtung abnehmen zu lassen. Das alles ist für einen einspurigen Waffelbackautomaten seit langem bekannt (DE-AS 11 30 773, DE- A 3 613 292).

Für sich sind halbautomatisch oder vollautomatisch arbeitende Backvorrichtungen für Waffeln bekannt, die mehrspurig, also mindestens zweispurig arbeiten (DE-PS 127 811, US-PS 3,605,642). Bekannt sind diese Backvorrichtungen aber nur für flache Waffeln, nicht für zu wickelnde Waffeln.

Die Anpassung einer bekannten Wickelvorrichtung für einen einspurig arbeitenden Waffelbackautomaten an die Gegebenheiten bei einem mehrspurig arbeitenden Waffelbackautomaten ist keineswegs ohne weiters möglich. Einerseits steht dem die räumliche enge in den einzelnen Backspuren entgegen, andererseits steht dem entgegen, daß moderne Waffelbackautomaten mit relativ kurzen Taktzeiten arbeiten.

Der Erfindung liegt daher die Aufgabe zugrunde, die bekannte Wickelvorrichtung für einen Waffelbackautomaten so auszugestalten und weiterzubilden, daß sie für einen mehrspurig arbeitenden, schnell taktenden Waffelbackautomaten optimal einsetzbar ist.

Die zuvor aufgezeigte Aufgabe wird bei einer Wickelvorrichtung nach dem Oberbegriff des Anspruchs 1, also einer Wickelvorrichtung mit Fördereinrichtung, Wickelvorrichtung und Abnahmeeinrichtung, durch die Merkmale des kennzeichnenden Teils des Anspruchs 1 gelöst. Im Prinzip kann jede einzelne Wickeleinrichtung, Fördereinrichtung und Abnahmeeinrichtung so aufgebaut sein, wie bekannte, einspurig arbeitende Wickeleinrichtungen, Fördereinrichtungen und Abnahmeeinrichtungen, allerdings ist Rücksicht auf die vorgegebenen Platzverhältnisse zu nehmen. Die spurweise Aufteilung der Wickelvorrichtung entspricht dabei der mehrspurigen Gestaltung der Backvorrichtung und bietet die Voraussetzung für eine weitere Leistungssteigerung der Wickelvorrichtung im Sinne einer Verkürzung der Taktzeiten. Konstruktiv ergibt sich erfindungsgemäß eine nahezu perfekte Lösung, da jede einzelne Spur nach oben hin völlig frei und zugänglich liegt und die Bewegungsmechanik für die einzelnen Wickeleinrichtungen in den einzelnen Spuren einander nicht behindern.

Es gibt nun verschiedene Möglichkeiten, die beanspruchte, durch den Patentanspruch 1 beschriebene Wickelvorrichtung auszugestalten und weiterzubilden, wozu zunächst auf die dem Anspruch 1 nachgeordneten Unteransprüche verwiesen werden darf. Im übrigen wird dazu verwiesen auf die Erläuterung bevorzugter Ausführungsbeispiele der Erfindung anhand der Zeichnung. In der Zeichnung zeigt

Fig. 1     in einer Drausicht ein Ausführungsbeispiel eines Waffelbackautomaten mit Backvorrichtung, Fördereinrichtungen und Wickeleinrichtungen,

Fig. 2     in Fig. 1 entsprechender Darstellung eine Wickelvorrichtung mit einer geänderten Anordnung der Wickeleinrichtungen,

Fig. 3     in einer Seitenansicht den Übergabebereich zwischen Fördereinrichtungen und Wickeleinrichtungen, ausschnittweise,

Fig. 4     in schematischer Darstellung die Gesamtheit der Wickeleinrichtungen zusammen mit dem Übergangsbereich aus Fig. 3,

Fig. 5     in schematischer Darstellung, geschnitten, die verschiedenen Wickeleinrichtungen benachbarter Spuren in unterschiedlichen Ebenen,

Fig. 6     in einer Stirnansicht die Fördereinrichtungen benachbarter Spuren in einem ersten Ausführungsbeispiel und

Fig. 7     in einer Stirnansicht die Fördereinrichtungen benachbarter Spuren in einem zweiten Ausführungsbeispiel.

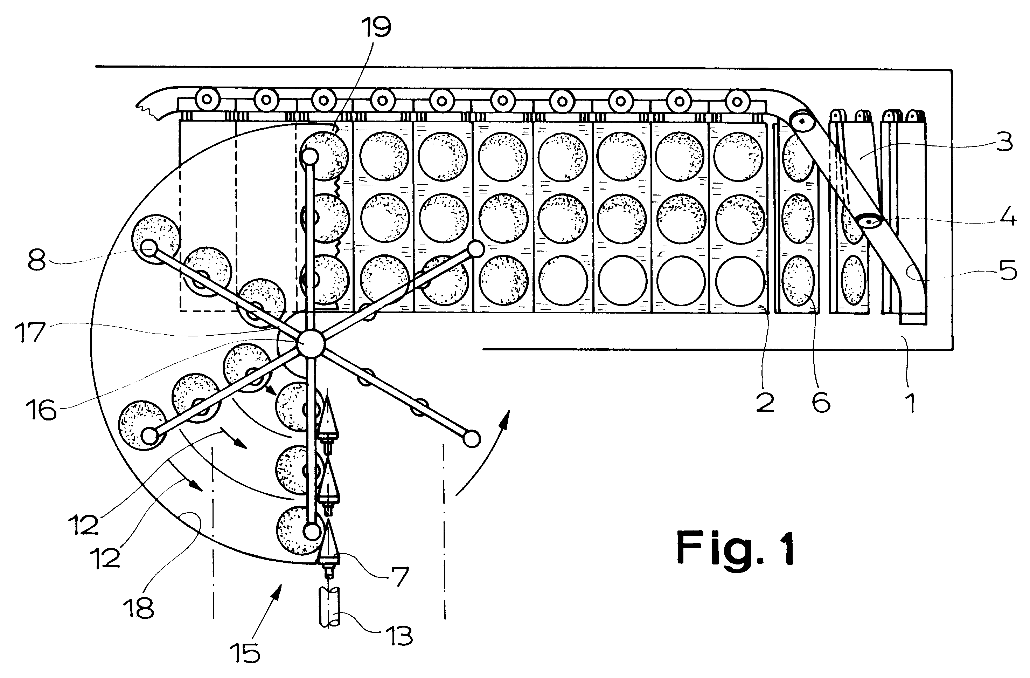

Fig. 1 zeigt schematisch einen Waffelbackautomaten mit einer sehr schematisch angedeuteten Backvorrichtung 1 mit einer Mehrzahl von jeweils dreispurigen, von einer nicht dargestellten Förderkette gezogenen unteren Backplatten 2, an denen jeweils eine ebenfalls dreispurige, obere Backplatte 3 schwenkbar angelenkt ist. In Fig. 1 ist gut erkennbar, daß die Förderkette die Backplatten 2, 3 in Fig. 1 von rechts kommend nach links zieht, wobei die jeweilige obere Backplatte 3 durch Führungselemente, nämlich eine Führungsrolle 4, die in einer Führungskulisse 5 läuft, aufgeschwenkt wird bis sie senkrecht zur Zeichenebene steht. Auf den unteren Backplatten 2 erkennbar liegen die gebackenen, aber noch flachen Waffeln 6.

Im linken Teil von Fig. 1 erkennt man nun die erfindungsgemäße Wickelvorrichtung mit unten links einer Mehrzahl von Wickeleinrichtungen 7 und einer Mehrzahl von zugeordneten Fördereinrichtungen 8.

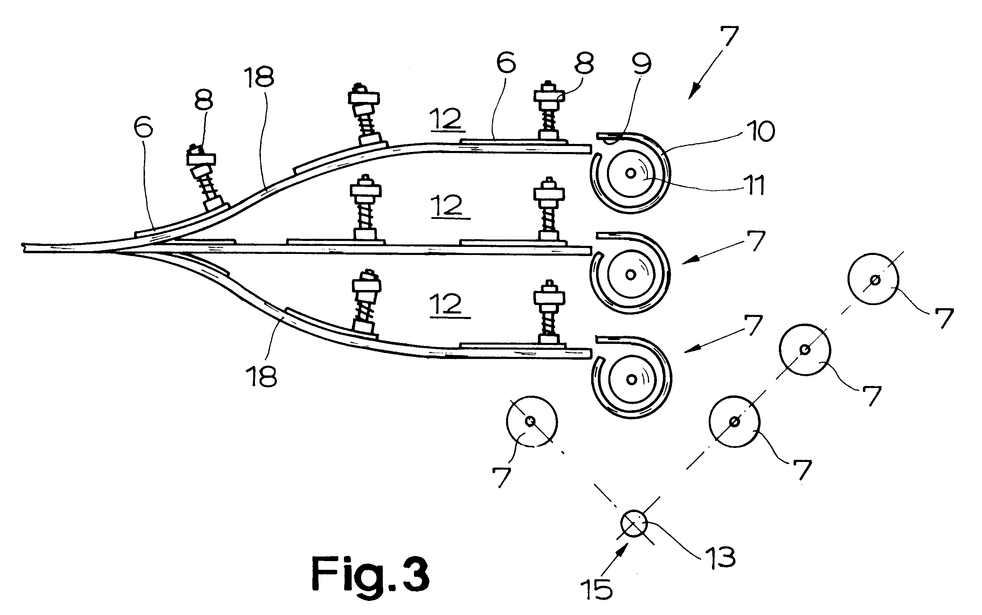

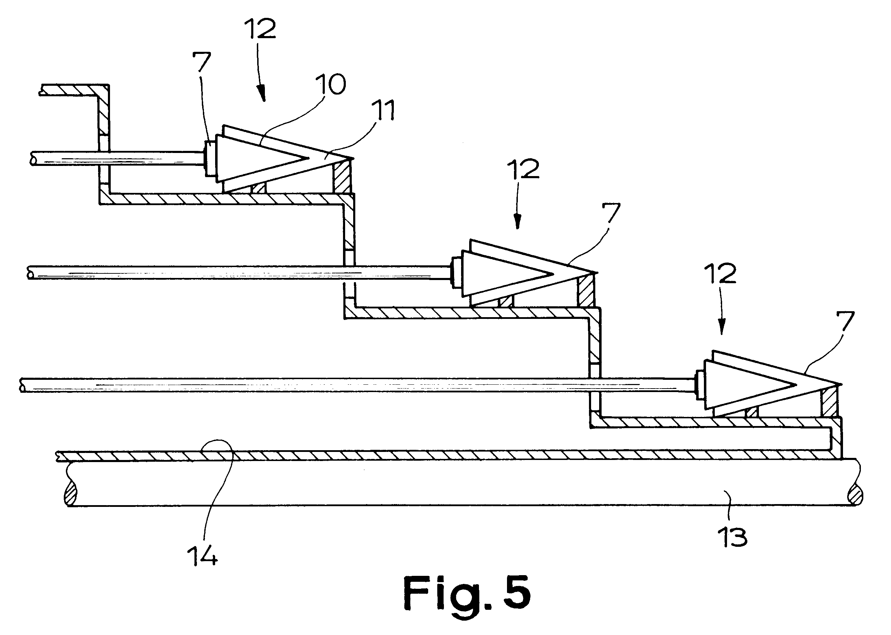

Jede Wickeleinrichtung 7 kann, in an sich bekannter Weise, aus einer einen seitlichen Einführschlitz 9 aufweisenden Wickelhülse 10 und einem kegelförmigen (oder zylinderförmigen) in Längsrichtung gegenüber der Wickelhülse 10 verschiebbaren Wickelkern 11 bestehen. Das ist in Fig. 3 und Fig. 5 recht gut zu erkennen.

Nicht dargestellt ist in Fig. 1 (und in den anderen Figuren) im übrigen, daß natürlich auch noch eine Abnahmeeinrichtung zum Abnehmen der gewickelten Waffeln von der bzw. jeder Wickeleinrichtung 7 vorhanden sein muß.

In Anpassung an die mehrspurig arbeitende Backvorrichtung 1 des in Fig. 1 dargestellten Waffelbackautomaten gilt nun erfindungsgemäß, daß die Wickelvorrichtung mehrspurig arbeitet und daß dazu mehrere, gleichzeitig in Wirkung tretende Wickeleinrichtungen 7 sowie Fördereinrichtungen 8 und Abnahmeeinrichtungen in entsprechender Anzahl vorhanden sind und jeweils einer Spur 12 eine Gruppe aus Wickeleinrichtung 7, Fördereinrichtung 8 und Abnahmeeinrichtung zugeordnet ist.

Aus dem Stand der Technik ist es bekannt, einer einspurig arbeitenden Backvorrichtung eine Fördereinrichtung und eine Wickeleinrichtung zuzuordnen (DE-AS 11 30 773). Das erfordert eine relativ langsam getaktete Backvorrichtung. Demgegenüber zeigt das dargestellte Ausführungsbeispiel (Fig. 1, Fig. 2, Fig. 3, Fig. 4), daß nach bevorzugter Lehre je Spur 12 mehrere, insbesondere sechs Wickeleinrichtungen 7 und, vorzugsweise mehrere, insbesondere sechs, Fördereinrichtungen 8 vorgesehen sind. Bei Abstimmung der Anzahl der Wickeleinrichtungen 7 und Fördereinrichtungen 8 je Spur 12 auf die Anzahl von Backplatten 2, 3 und die Taktzeit der Backvorrichtung 1, kann eine optimale, äußerst schnelle Taktung des Waffelbackautomaten erfolgen.

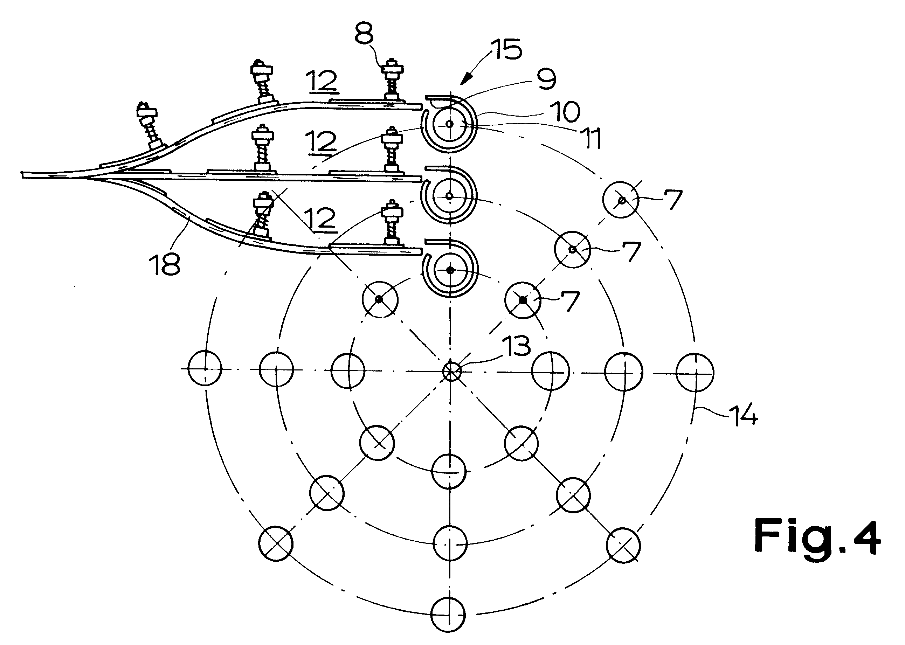

Fig. 4 zeigt nun eine konstruktive Lösung der Anordnung mehrerer Wickeleinrichtungen 7 je Spur 12. Fig. 4 ist dabei eine Darstellung in einer Ansicht gemäß Fig. 1 von unten her gesehen. Für diese Konstruktion gilt, daß die mehreren Wickeleinrichtungen 7 einer Spur 12 in einem um eine Drehachse 13 drehbaren Sternträger 14 in einer Ebene oder in einer in einer Ebene umlaufenden Trägerkette od. dgl. zusammengefaßt sind. Die Drehachse 13 ist auch in Fig. 1 angedeutet, wobei die seitlichen strichpunktierten Linien die jeweils äußersten, unterhalb der Zeichenebene liegenden Gruppen von Wickeleinrichtungen 7 für die verschiedenen Spuren 12 darstellen. Anstelle der Zusammenfassung in einem Sternträger 14, wie hier dargestellt, könnten die Wickeleinrichtungen 7 auch in einer umlaufenden Trägerkette zusammengefaßt sein, was es erlauben würde, im Übergabebereich 15 eine geradlinige Führung der Wickeleinrichtungen 7 zu realisieren. Allerdings ist die Konstruktion mit einer Trägerkette aufwendiger und damit teurer.

In entsprechender Weise wie Fig. 4 das für die Wickeleinrichtungen 7 zeigt, zeigt Fig. 1 die entsprechende konstruktive Lösung für die Fördereinrichtungen 8, nämlich daß die mehreren Fördereinrichtungen 8 einer Spur 12 in einem um eine Drehachse 16 drehbaren Förderstern 17 in einer Ebene oder in einer in einer Ebene umlaufenden Förderkette od. dgl. zusammengefaßt sind. Auch hier gilt, daß eine Förderkette anstelle eines Fördersterns 17 wie dargestellt den Vorteil einer geradlinigen Führung der Fördereinrichtungen 8 im Übergabebereich 15 hätte, derartige Konstruktionen sind an sich natürlich bekannt.

Das in den Fig. 1 bis 4 insoweit einheitlich dargestellte Ausführungsbeispiel schafft den erfindungsgemäß realisierten Übergabebereich 15 durch unterschiedlich liegende Ebenen, nämlich dadurch, daß die Drehachse 13 bzw. die Ebene der Wickeleinrichtungen 7 einer Spur 12 senkrecht zur Drehachse 16 bzw. zur Ebene der Fördereinrichtungen 8 der Spur 12 steht. Im hier dargestellten und insoweit bevorzugten Ausführungsbeispiel gilt dabei, daß die Ebene des Sternträgers 14 etwa vertikal und die Ebene des Fördersterns 17 etwa horizontal liegt.

Besonders zweckmäßig ist es natürlich, daß, wie in Fig. 1 bzw. in Fig. 4 dargestellt, je Spur 12 die gleiche Anzahl von Wickeleinrichtungen 7 und/oder Fördereinrichtungen 8 und/oder Abnahmeeinrichtungen vorhanden ist und, vorzugsweise, die Wickeleinrichtungen 7 und/oder die Fördereinrichtungen 8 und/oder die Abnahmeeinrichtungen der verschiedenen Spuren 12 miteinander fluchten. Im hier dargestellten konstruktiven Ausführungsbeispiel gilt, daß die Wickeleinrichtungen 7 und/oder die Fördereinrichtungen 8 und/oder die Abnahmeeinrichtungen der verschiedenen Spuren 12 jeweils auf einem Arm des Sternträgers 14 bzw. des Fördersterns 17 od. dgl. angeordnet sind. Hinsichtlich der nicht dargestellten Abnahmeeinrichtungen reicht es vermutlich aus, unterhalb des Sternträgers 14 im hier dargestellten Ausführungsbeispiel eine Gruppe von Abstreifern und eine Auffangwanne aufzustellen. Andererseits wären natürlich auch Abnahme- und Sammeleinrichtungen hier verwendbar.

Das in Fig. 1 dargestellte Ausführungsbeispiel einer Wickelvorrichtung unterscheidet sich gegenüber dem in den übrigen Figuren dargestellten Ausführungsbeispiel dadurch, daß hier, Fig. 1, die einzelnen Spuren 12 der Wickelvorrichtung in einer Ebene liegen, daß also die Wickeleinrichtungen 7 in unterschiedlichen Spuren 12 in gleichen Abständen von der Drehachse 13 bzw. von der Mittellinie der Bahn der Trägerkette angeordnet sind. Das ist durch die strichpunktierten Linien angedeutet. In einer Fig. 4 entsprechenden Darstellung würde sich praktisch nur der Außenkreis von Wickeleinrichtungen 7 ergeben, da die Wickeleinrichtungen 7 der verschiedenen Spuren 12 dann senkrecht zur Zeichenebene gesehen miteinander fluchten würden.

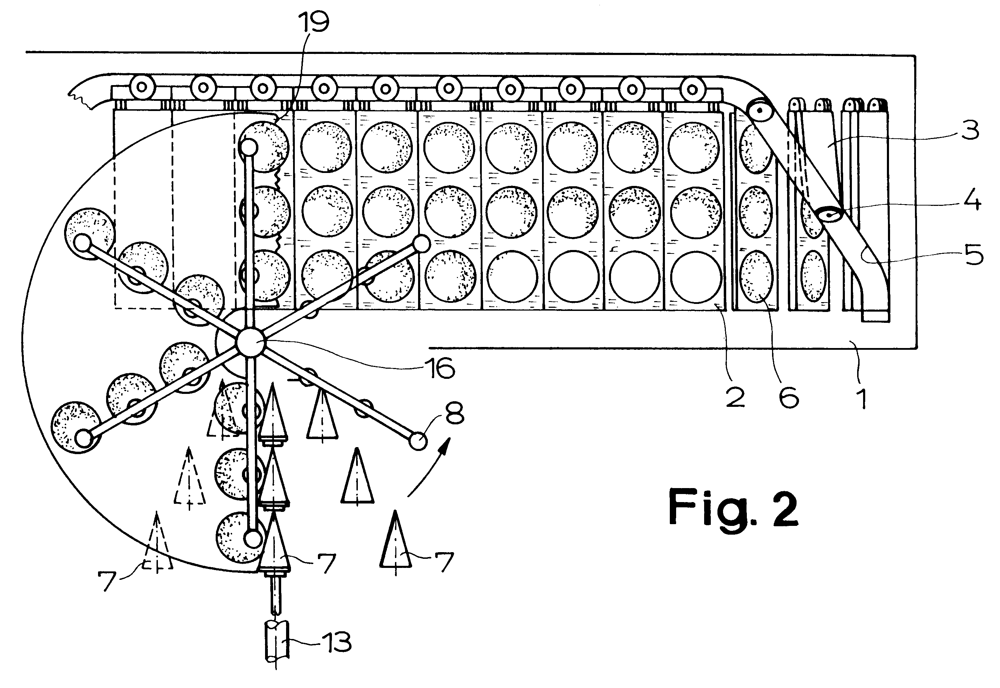

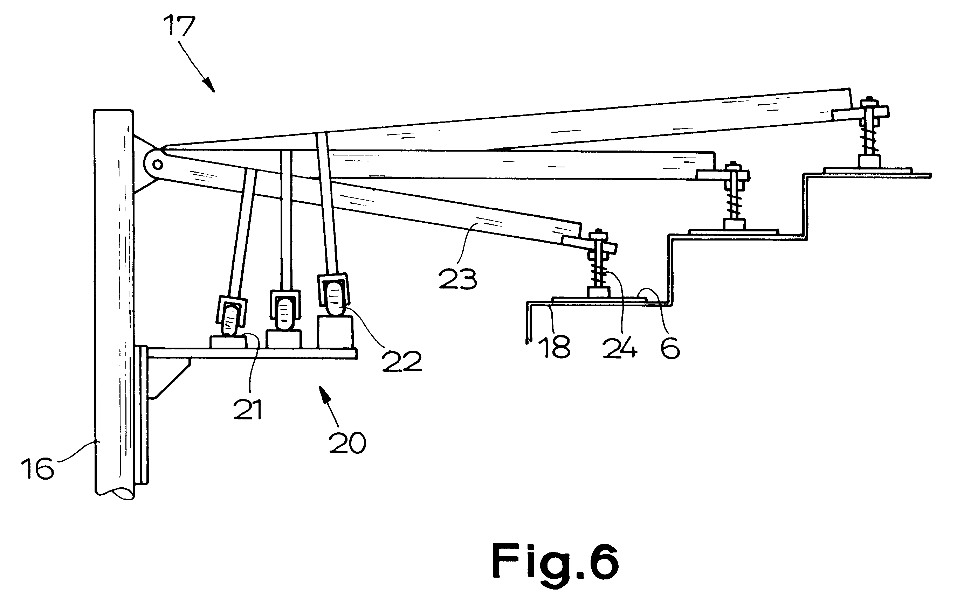

Besonders zweckmäßig hinsichtlich der Gestaltung des Übergangsbereichs 15 und hinsichtlich der Erkennbarkeit und Zugänglichkeit, damit aber auch der Wartungs- und Reparaturfreundlichkeit ist hingegen das Ausführungsbeispiel der Fig. 2 bis 7, das dadurch gekennzeichnet ist, daß die einzelnen Spuren 12 der Wickelvorrichtung zumindest im Übergabebereich 15 der Wickeleinrichtungen 7 und Fördereinrichtungen 8, vorzugsweise bei allen Wickeleinrichtungen 7, in verschiedenen Ebenen, vorzugsweise in stufenartig gegeneinander versetzten Ebenen, liegen. In Fig. 2 ist das durch die gestrichelt dargestellten Konturen der unterhalb der Zeichenebene liegenden, nicht aktiven Wickeleinrichtungen 7 angedeutet, Fig. 3 und Fig. 4 lassen das in der Ansicht erkennen und Fig. 5 macht den Übergangsbereich 15 bzw. die Außenkontur des Sternträgers 14, dessen obere "Hälfte" hier praktisch nur gezeigt ist, außerordentlich schön deutlich. Jede einzelne Spur 12 liegt nach oben hin völlig frei und zugänglich und die Bewegungsmechanik für die einzelnen Wickeleinrichtungen 7 in den einzelnen Spuren 12 liegt in jeweils einer eigenen Ebene, diese Mechaniken behindern sich also gegenseitig überhaupt nicht. Das ist eine konstruktiv nahezu perfekte Lösung.

Im hier dargestellten und insoweit bevorzugten Ausführungsbeispiel sind die unterschiedlichen Ebenen im Übergangsbereich 15 dadurch realisiert, daß die Wickeleinrichtungen 7 in unterschiedlichen Spuren 12 in unterschiedlichen Abständen von der Drehachse 13 bzw. von der Mittellinie der Bahn der Trägerkette angeordnet sind. Hinsichtlich der Lage der Fördereinrichtungen 8 im Übergabebereich 15 sind die unterschiedlichen Ebenen dadurch realisiert, daß die Fördereinrichtungen 8 in unterschiedlichen Spuren 12 zumindest im Übergabebereich 15 in unterschiedlichen Höhen bezüglich einer Bezugsebene liegen.

In Anpassung an eine unterschiedliche Neigung der Bewegungsrichtung der Fördereinrichtungen 8 im Übergabebereich 15 können die Einführschlitze 9 der Wickeleinrichtungen 7 auch unterschiedlich geneigt sein, also praktisch schräg zur Waagerechten stehen.

Im hier dargestellten und bevorzugten Ausführungsbeispiel werden die flachen, heißen Waffeln 6 mittels der Fördereinrichtungen 8 auf Zuführungsbahnen 18 bewegt. Die Zuführungsbahnen 18 sind als zueinander konzentrische Halbkreise ausgeführt und in einem großflächigen Zuführungsblech zusammengefaßt, das an seiner anlaufseitigen Stirnkante als messerartiger Kamm 19 gestaltet ist. Jeder Fördereinrichtung 8 ist also quasi eine Zuführungsbahn 18 für die gebackenen Waffeln 6 zugeordnet, die, im hier dargestellten Ausführungsbeispiel, im Übergabebereich 15 in unterschiedliche Ebenen führen. Dabei ist im dargestellten Ausführungsbeispiel und nach bevorzugter Lehre die äußere Zuführungsbahn 18 im Übergabebereich 15 in der höchsten Ebene, während die innere Zuführungsbahn 18 in die niedrigste Ebene führt, während die mittlere Zuführungsbahn 18 mehr oder weniger ohne Höhenveränderung in den Übergabebereich 15 hineinläuft.

Die einzelnen Figuren zeigen im übrigen noch weitere konstruktive Details der beanspruchten Wickelvorrichtung. So gilt zunächst, daß die Fördereinrichtungen 8 mit jeweils einer Bahnsteuerung 20 ausgerüstet sind, um unabhängig von den Zuführungsbahnen 18 in ihrer Höhe gesteuert zu werden. Das gilt insbesondere für den Rückschwenkbereich, in Fig. 1 und 2 jeweils mit dem bogenförmigen Pfeil gekennzeichnet. Diese Bahnsteuerungen 20 bestehen im dargestellten Ausführungsbeispiel aus auf Kulissen 21 nahe der Drehachse 16 abrollenden Stützrollen 22, die jeweils eine schwenkfähige Strebe 23 der entsprechenden Fördereinrichtung 8 unterstützen. Jede Fördereinrichtung 8 weist im übrigen einen Förderstempel 24 für die flache Waffel 6 auf.

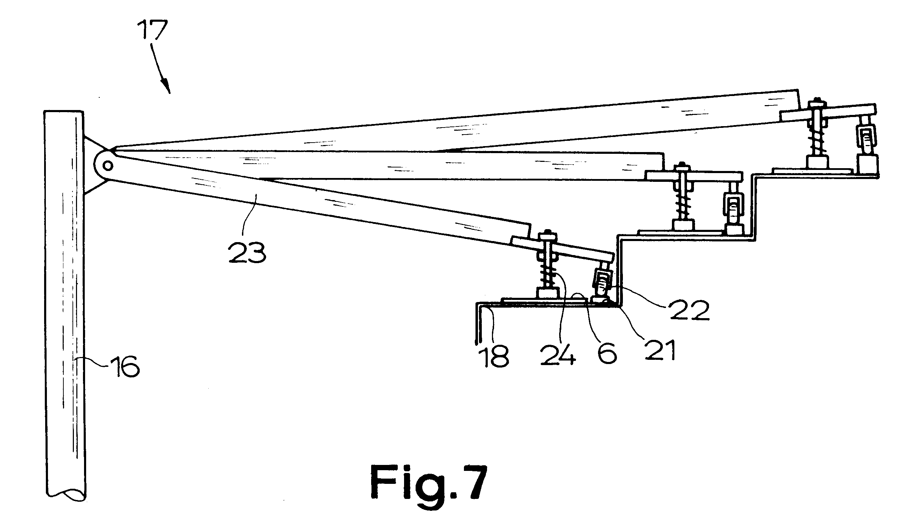

Fig. 7 zeigt die Kulissen 21 und Stützrollen 22 nicht der Drehachse 16, sondern den Zuführungsbahnen 18 zugeordnet, wobei allerdings dann die Zuführungsbahnen 18, zumindest aber die Kulissen 21 bis in den Bereich der Backvorrichtung 1 zurückgeführt werden müßten.

Zu Fig. 4 bleibt noch zu bemerken, daß die nicht dargestellte Abnahmeeinrichtung beispielsweise an dem dem Übergabebereich 15 gegenüberliegenden Bereich angeordnet sein kann.

## Patentansprüche

1. Wickelvorrichtung für einen Waffelbackautomaten, mit einer Wickeleinrichtung (7), vorzugsweise aus einer einen seitlichen Einführschlitz (9) aufweisenden Wickelhülse (10) und einem kegelförmigen oder zylinderförmigen, in Längsrichtung gegenüber der Wickelhülse (10) verschiebbaren Wickelkern (11), mit einer Fördereinrichtung (8) zum Abnehmen einer gebackenen Waffel (6) von einer Backplatte (2) und Fördern der Waffel (6) zur Wickeleinrichtung (7) und mit einer Abnahmeeinrichtung zum Abnehmen der gewickelten Waffel von der Wik-

keleinrichtung (7), **dadurch gekennzeichnet,** daß die Wickelvorrichtung mehrspurig ausgebildet ist und daß dazu mehrere, gleichzeitig in Wirkung tretende Wickeleinrichtungen (7) sowie Fördereinrichtungen (8) und Abnahmeeinrichtungen in entsprechender Anzahl vorhanden sind, daß jeweils einer Spur (12) eine Gruppe aus Wickeleinrichtung (7), Fördereinrichtung (8) und Abnahmeeinrichtung zugeordnet ist und daß die einzelnen Spuren (12) der Wickelvorrichtung zumindest im Übergabebereich (15) der Wickeleinrichtungen (7) und Fördereinrichtungen (8) in verschiedenen Ebenen liegen.

2. Wickelvorrichtung nach Anspruch 1, dadurch gekennzeichnet, daß die verschiedenen Ebenen stufenartig gegeneinander versetzt sind.

3. Wickelvorrichtung nach Anspruch 1 oder 2, dadurch gekennzeichnet, daß die Wickeleinrichtungen (7) in unterschiedlichen Spuren (12) in unterschiedlichen Abständen von der Drehachse (13) bzw. von der Mittellinie der Bahn der Trägerkette angeordnet sind.

4. Wickelvorrichtung nach einem der Ansprüche 1 bis 3, dadurch gekennzeichnet, daß die Fördereinrichtungen (8) in unterschiedlichen Spuren (12) zumindest im Übergabebereich (15) in unterschiedlichen Höhen bezüglich einer Bezugsebene liegen.

5. Wickelvorrichtung nach einem der Ansprüche 1 bis 4, dadurch gekennzeichnet, daß je Spur (12) mehrere, insbesondere sechs Wickeleinrichtungen (7) und, vorzugsweise mehrere, insbesondere sechs, Fördereinrichtungen (8) vorgesehen sind.

6. Wickelvorrichtung nach Anspruch 5, dadurch gekennzeichnet, daß die mehreren Wickeleinrichtungen (7) einer Spur (12) in einem um eine Drehachse (13) drehbaren Sternträger (14) in einer Ebene oder in einer in einer Ebene umlaufenden Trägerkette od. dgl. zusammengefaßt sind.

7. Wickelvorrichtung nach Anspruch 5 oder 6, dadurch gekennzeichnet, daß die mehreren Fördereinrichtungen (8) einer Spur (12) in einem um eine Drehachse (16) drehbaren Förderstern (17) in einer Ebene oder in einer in einer Ebene umlaufenden Förderkette od. dgl. zusammengefaßt sind.

8. Wickelvorrichtung nach den Ansprüchen 6 und 7, dadurch gekennzeichnet, daß die Drehachse (13) bzw. die Ebene der Wickeleinrichtungen (7) einer Spur (12) senkrecht zur Drehachse (16) bzw. zur Ebene der Fördereinrichtungen (8) der Spur (12) steht, und, vorzugsweise, daß die Ebene des Sternträgers (14) etwa vertikal und die Ebene des Fördersterns (17) etwa horizontal liegt.

9. Wickelvorrichtung nach einem der Ansrüche 1 bis 8, dadurch gekennzeichnet, daß je Spur (12) die gleiche Anzahl von Wickeleinrichtungen (7) und/oder Fördereinrichtungen (8) und/oder Abnahmeeinrichtungen vorhanden ist und, vorzugsweise, die Wickeleinrichtungen (7) und/oder die Fördereinrichtungen (8) und/ oder die Abnahmeeinrichtungen der verschiedenen Spuren (12) miteinander fluchten

10. Wickelvorrichtung nach Anspruch 9, dadurch gekennzeichnet, daß die Wikkeleinrichtungen (7) und/oder die Fördereinrichtungen (8) und/oder die Abnahmeeinrichtungen der verschiedenen Spuren (12) jeweils auf einem Arm des Sternträgers (14) bzw. des Fördersterns (17) od. dgl. angeordnet sind.

11. Wickelvorrichtung nach einem der Ansprüche 1 bis 10, dadurch gekennzeichnet, daß jede Fördereinrichtung (8) eine Zuführungsbahn (18) für die gebakkenen Waffeln (6) aufweist und die Zuführungsbahnen (18) im Übergabebereich (15) in unterschiedliche Ebenen führen.

12. Wickelvorrichtung nach Anspruch 11, dadurch gekennzeichnet, daß die äussere Zuführungsbahn (18) in die höchste und die innere Zuführungsbahn (18) in die niedrigste Ebene führt.

13. Wickelvorrichtung nach Anspruch 11 oder 12, dadurch gekennzeichnet, daß die Fördereinrichtungen (8) mit den Zuführungsbahnen (18) zwischen der Backvorrichtung (1) und dem Übergabebereich (15) zu den Wickeleinrichtungen (7) bogenförmig, vorzugsweise konzentrisch kreisbogenförmig, insbesondere über einen Winkel von 90° bis vorzugsweise 180°, verlaufen.

14. Wickelvorrichtung nach einem der Ansprüche 1 bis 13, dadurch gekennzeichnet, daß die Fördereinrichtungen (8) mit jeweils einer Bahnsteuerung (20) und/oder mit jeweils einer schwenkfähigen Strebe (23) und/oder mit jeweils einem Förderstempel (24) versehen sind.

## Claims

1. A coiling equipment for an automatic waffle-baking machine, with a coiling appliance (7), preferably consisting of a coiling jacket (10) possessing an insertion slot (9) at its side and of a conically-shaped or cylindrically-shaped coiling core (11) that can be moved relatively to the coiling jacket (10), with a conveyor appliance (8) to detach a baked waffle (6) from a baking plate (2) and to convey the waffle (6) to the coiling appliance (7) and with a detachment appliance to detach the coiled waffle from the coiling appliance (7), *characterized in that* the coiling equipment is constructed with a plurality of tracks and that accordingly several coiling appliances (7) as well as conveyor appliances (8) and detachment appliances all coming into action simultaneously are present in appropriate numbers, that a group consisting of a coiling appliance (7), a conveyor appliance (8) and a detachment appliance is assigned to each track (12) and at least at the transfer point (15) of the coiling appliances (7) and the conveyor appliances (8) the individual tracks (12) of the coiling equipment lie in different planes.

2. A coiling equipment according to Claim 1, *characterized in that* the different planes are displaced from one another step-wise.

3. A coiling equipment according to Claim 1 or 2, *characterized in that* the coiling appliances (7) of different tracks (12) are located at different distances from the rotational axis (13) or from the central line of the path of the carrier chain.

4. A coiling equipment according to one of Claims 1 to 3, *characterized in that* at least at the transfer point (15) the conveyor appliances (8) of different tracks (12) lie at different levels relatively to a reference plane.

5. A coiling equipment according to one of Claims 1 to 4, *characterized in that* several, particularly six coiling appliances (7) and preferably several, particularly six conveyor appliances (8) are provided for each track (12).

6. A coiling equipment according to Claim 5, *characterized in that* the several coiling appliances (7) of a track (12) are integrated in one plane in a multi-arm carrier (14) rotatable around a rotation axis (13) or in a carrier chain circulating in one plane, or the like.

7. A coiling equipment according to Claim 5 or 6, *characterized in that* the several conveyor appliances (8) of a track (12) are integrated in one plane in a multi-arm conveyor (17) rotatable around a rotation axis (16) or in a conveyor chain circulating in one plane, or the like.

8. A coiling equipment according to Claims 6 or 7, *characterized in that* the rotational axis (13) or the plane of the coiling appliances (7) of a track (12) is perpendicular to the rotational axis (16) or to the plane of the conveyor appliances (8) of the track (12) and, preferably, that the plane of the multi-arm carrier (14) is approximately vertical and the plane of the multi-arm conveyor (17) is approximately horizontal.

9. A coiling equipment according to Claim 1 to 8, *characterized in that* the same number of coiling appliances (7) and/or conveyor appliances (8) and/or detachment appliances is present on each track (12) and, preferably, the coiling appliances (7) and/or the conveyor appliances (8) and/or the detachment appliances of the different tracks (12) are in alignment with one another.

10. A coiling equipment according to Claim 9, *characterized in that* the coiling appliances (7) and/or the conveyor appliances (8) and or the detachment appliances of the various tracks (12) are each located on one arm of the multi-arm carrier (14) or of the multi-arm conveyor (17) or the like.

11. A coiling equipment according to one of Claims 1 to 10, *characterized in that* each conveyor appliance (8) possesses a feed path (18) for the baked waffles (6) and the feed paths (18) lead to the transfer point (15) at different levels.

12. A coiling equipment according to Claim 11, *characterized in that* the outer feed path (18) leads to the highest level and the inner feed path (18) leads to the lowest level.

13. A coiling equipment according to Claim 11 or 12, *characterized in that* the conveyor appliances (8) with the feed paths (18) extend in a curved shape and preferably in a concentric circular arc shape between the baking equipment (1) and the transfer point (15) to the coiling appliances (7), preferably extending over an angle of 90° to preferably 180°.

14. A coiling equipment according to one of Claims 1 to 13, *characterized in that* conveyor appliances (8) are provided each with a path controlling device (20) and/or each with a tiltable strut (23) and/or each with a conveyor plunger (24).

**Revendications**

1. Dispositif d'enroulement pour automate à cuire des gaufres, muni d'un mécanisme d'enroulement (7), de préférence, constitué par une douille d'enroulement (10) présentant une fente latérale d'introduction (9) et par un noyau d'enroulement (11) de forme conique ou cylindrique apte à coulisser en direction longitudinale par rapport à la douille d'enroulement (10), par un mécanisme de transport (8) destiné à prélever une gaufre cuite (6) à partir d'une plaque de cuisson (2) et à transporter la gaufre (6) en direction du mécanisme d'enroulement (7), ainsi que par un mécanisme de prélèvement destiné à prélever la gaufre enroulée, hors du mécanisme d'enroulement (7), **caractérisé en ce que** le dispositif d'enroulement est réalisé en plusieurs pistes et **en ce que,** à cet effet, on dispose, en un nombre correspondant, de plusieurs mécanismes d'enroulement (7), ainsi que de plusieurs mécanismes de transport (8) et de plusieurs mécanismes de prélèvement entrant simultanément en action, **en ce que,** à chaque piste (12), correspond un groupe constitué par un mécanisme d'enroulement (7), par un mécanisme de transport (8) et par un mécanisme de prélèvement et **en ce que** les pistes individuelles (12) du dispositif d'enroulement se situent dans des plans différents, au moins dans la zone de transfert (15) des mécanismes d'enroulement (7) et des mécanismes de transport (8).

2. Dispositif d'enroulement selon la revendication 1, **caractérisé en ce que** les différents plans sont décalés en gradins l'un par rapport à l'autre.

3. Dispositif d'enroulement selon la revendication 1 ou 2**, caractérisé en ce que** les mécanismes d'enroulement (7) dans les différentes pistes (12) sont disposés selon des écartements différents par rapport à l'axe de rotation (13) ou par rapport à la ligne médiane de la voie parcourue par la chaîne porteuse.

4. Dispositif d'enroulement selon l'une quelconque des revendications 1 à 3, **caractérisé en ce que** les mécanismes de transport (8) dans les différentes pistes (12) se situent, au moins dans la zone de transfert (15), à différentes hauteurs par rapport à un plan de référence.

5. Dispositif d'enroulement selon l'une quelconque des revendications 1 à 4, **caractérisé en ce que,** pour chaque piste (12), on prévoit plusieurs mécanismes d'enroulement (7), en particulier six et, de préférence, plusieurs mécanismes de transport (8), en particulier six.

6. Dispositif d'enroulement selon la revendication 5, **caractérisé en ce que** les divers mécanismes d'enroulement (7) d'une piste (12) sont réunis sur un support stellaire (14) tournant autour d'un axe rotatif (13), dans un seul plan ou sur une chaîne porteuse ou analogues tournant dans un seul plan.

7. Dispositif d'enroulement selon la revendication 5 ou 6, **caractérisé en ce que** les divers mécanismes de transport (8) d'une piste (12) sont réunis sur une étoile de transport (17) tournant autour d'un axe rotatif (16), dans un seul plan ou sur une chaîne de transport tournant dans un seul plan ou analogues.

8. Dispositif d'enroulement selon les revendications 6 et 7, **caractérisé en ce que** l'axe de rotation (13) ou le plan des dispositifs d'enroulement (7) d'une piste (12), est disposé perpendiculairement à l'axe de rotation (16) ou au plan des mécanismes de transport (8) de la piste (12) et, de préférence, **en ce que** le plan du support stellaire (14) est situé à peu près en position verticale et le plan de l'étoile de transport (17) est situé à peu près en position horizontale.

9. Dispositif d'enroulement selon l'une quelconque des revendications 1 à 8, **caractérisé en ce que,** pour chaque piste (12), on dispose du même nombre de mécanismes d'enroulement (7) et/ou de mécanismes de transport (8) et/ou de mécanismes de prélèvement et, de préférence, les mécanismes d'enroulement (7) et/ou les mécanismes de transport (8) et/ou les mécanismes de prélèvement des différentes pistes (12) se trouvent mutuellement à fleur.

10. Dispositif d'enroulement selon la revendication 9, **caractérisé en ce que** les mécanismes d'enroulement (7) et/ou les mécanismes de transport (8) et/ou les mécanismes de prélèvement des différentes pistes (12) sont chaque fois disposés sur un bras du support stellaire (14) ou de l'étoile de transport (17) ou analogues.

**11.** Dispositif d'enroulement selon l'une quelconque des revendications 1 à 10, **caractérisé en ce que** chaque mécanisme de transport (8) présente une voie d'alimentation (18) pour les gaufres cuites (6), les voies d'alimentation (18) dans la zone de transfert (15) conduisant à des plans différents.

**12.** Dispositif d'enroulement selon la revendication 11, **caractérisé en ce que** la voie d'alimentation externe (18) conduit au plan le plus élevé et la voie d'alimentation interne (18) conduit au plan le plus bas.

**13.** Dispositif d'enroulement selon la revendication 11 ou 12, **caractérisé en ce que** les mécanismes de transport (8) munis des voies d'alimentation (18) défilent entre le dispositif de cuisson (1) et la zone de transfert (15) conduisant aux mécanismes d'enroulement (7), en formant des arcs, de préférence en formant des arcs concentriques, en particulier en formant un angle de 90° à, de préférence, 180°.

**14.** Dispositif d'enroulement selon l'une quelconque des revendications 1 à 13, **caractérisé en ce que** les mécanismes de transport (8) sont munis chacun d'une commande de voie (20) et/ou chacun d'un montant pivotant (23) et/ou chacun d'un poinçon d'alimentation (24).

**Fig. 1**

EP 0 303 299 B1

Fig. 2

**Fig.3**

EP 0 303 299 B1

Fig.4

EP 0 303 299 B1

Fig. 5

13

Fig.6

Fig.7